# EUROPÄISCHE PATENTANMELDUNG

(11) **EP 2 431 629 A2**
(43) Veröffentlichungstag der Anmeldung: **21.03.2012**
(21) Anmeldenummer: 11006785.7
(22) Anmeldetag: 19.08.2011
(51) Int. Cl.: F16F 1/38, F16C 17/00

(54) **Gelenklager**

(30) Priorität: 17.09.2010 DE 102010045675
(71) Anmelder: Jörn GmbH, 71336 Waiblingen (DE)
(72) Erfinder: Mursinsky, Jörg, 71364 Winnenden (DE); Reinke, Kai, 71336 Waiblingen (DE)
(74) Vertreter: Liebl, Thomas

(57) **Zusammenfassung**

Die Erfindung betrifft ein Gelenklager (1) mit einem Lagerinnenteil (2) als erstem Lagerteil mit beidseitig gegenüberliegenden Anschlusszapfen (10, 11) und mit einem Gehäuse (3) als zweitem Lagerteil, in dem das Lagerinnenteil (2) elastisch gelagert ist dergestalt, dass es mit seinen Anschlusszapfen (10, 11) zumindest teilweise aus gegenüberliegenden Durchbrüchen (14, 15) des Gehäuses (3) herausragt. Erfindungsgemäß weist das Lagerinnenteil (2) ein Mittenteil (4) mit einem Freigang (24) zum umgebenden Gehäuse (3) auf und beidseits des Mittenteils (4) schließt sich jeweils ein bezüglich einer Lagerachse (5) rotationssymmetrischer Gleitkragen (6, 7) an, der jeweils in den aus dem zugeordneten Durchbruch (14, 15) geführten Anschlusszapfen (10, 11) übergeht. Ferner sind beide Gleitkragen (6, 7) im Gehäuse (3) jeweils über eine Kombination aus übereinanderliegendem Gleitring (16, 17) und Elastomerring (22, 23) in Richtung der Lagermitte vorgespannt, so dass sowohl eine rückstellkraftfreie Verdrehung des Lagerinnenteils (2) um die Lagerachse (5) um den vollen Winkelbereich, als auch eine kardanische Auslenkung mit elastischem Widerstand möglich ist.

## Beschreibung

Die Erfindung betrifft ein Gelenklager nach dem Oberbegriff des Anspruchs 1.

Ein gattungsgemäßes allgemein bekanntes Gelenklager besteht aus einem Lagerinnenteil als erstem Lagerteil mit beidseitig gegenüberliegenden Anschlusszapfen sowie einem Gehäuse als zweitem Lagerteil, in dem das Lagerinnenteil elastisch gelagert ist, wobei das Lagerinnenteil mit seinen Anschlusszapfen zumindest teilweise aus gegenüberliegenden Durchbrüchen des Gehäuses herausragt.

Konkret sind dazu Buchsenlager allgemein bekannt mit einem zylindrischen Gehäuse und einem zylindrischen Lagerinnenteil mit dazwischen fest angehafteten Elastomerelementen. Auch sind Ausführungsformen mit anderen geometrischen Formen allgemein bekannt. Eine gemeinsame Eigenschaft solcher Lagerausführungen besteht darin, dass Relativbewegungen zwischen dem Lagerinnenteil und dem Gehäuse molekular im Elastomermaterial der fest angehafteten Elastomerelemente aufgenommen werden, wodurch insbesondere nur relativ kleine Verdrehungen des Lagerinnenteils um die Zapfenachse sowie relativ kleine kardanische Verschwenkungen möglich sind. Zudem treten bei Verdrehungen mit größeren Drehwinkeln große Rückstellkräfte auf, die je nach dem Einsatzfall unerwünscht sein können. Bei großen Verdrehungen, insbesondere bei Überlastungen mit einer Auflösung der Haftverbindung und einer Relativbewegung zwischen Elastomerelementen und Anlagefläche, tritt ein hoher Elastomerverschleiß auf, der zu einem Ausfall des Gelenklagers führt.

Weiter sind allgemein Kugelgelenke bekannt, bei denen ein kugelförmiges Innenteil mit einem Anschlusszapfen in einem Gehäuse mit einer zugeordneten konkaven Kugelkalotte aufgenommen ist, wobei der Anschlusszapfen aus einem Gehäusedurchbruch herausragt. Das Kugelteil liegt hier gegebenenfalls über ein Gleitmittel unmittelbar in der Kugelkalotte ein, wodurch eine rückstellkraftfreie Verdrehung sowie eine kardanische Auslenkung des Anschlusszapfens im Rahmen des Durchbruchs möglich ist. Allerdings werden hier nachteilig Vibrationen und Körperschall zwischen den Lagerteilen weitgehend ungedämpft übertragen.

Aufgabe der Erfindung ist es, ein gattungsgemäßes Gelenklager so weiterzubilden, dass eine rückstellkraftfreie Verdrehung des Lagerinnenteils um die Zapfenachse sowie eine relativ große kardanische Auslenkung mit elastischem Widerstand möglich ist.

Diese Aufgabe wird mit den Merkmalen des Anspruchs 1 gelöst.

Gemäß Anspruch 1 weist das Lagerinnenteil ein Mittenteil mit einem Freigang zum umgebenden Gehäuse auf. Beiderseits des Mittenteils schließt sich jeweils ein bezüglich einer Lagerachse rotationssymmetrischer Gleitkragen an, der jeweils in den aus dem zugeordneten Durchbruch geführten Anschlusszapfen übergeht. Die beiden Gleitkragen sind im Gehäuse jeweils über eine Kombination aus übereinanderliegendem Gleitring und Elastomerring in Richtung der Lagermitte vorgespannt, gleitbar gelagert. Dadurch ist eine rückstellkraftfreie Verdrehung des Lagerinnenteils um die Lagerachse wegen der Drehverbindung an den Gleitkragen sowie eine kardanische Auslenkung mit elastischem Widerstand durch eine Verformung des Elastomermaterials der Elastomerringe möglich. Durch die Vorspannung in Richtung der Lagermitte wird einerseits das Lagerinnenteil im umgebenden Gehäuse gehalten, wobei auch axiale Auslenkungen möglich sind und andererseits das Elastomermaterial in allgemein bekannter Weise gegen Überlastungen geschützt. Anpassungen und Dimensionierungen für konkrete Einsatzfälle können einfach durch Variationen der Anstellwinkel der Elastomerringe bezüglich der Lagermitte sowie der Elastomerringdicke durchgeführt werden. Insbesondere können bei symmetrischen, doppelkonischen Ausführungen annähernd die Funktionen eines Kugelgelenks bezüglich kardanischer Auslenkungen erhalten werden. Wenn die Abstützflächen an den Elastomerringen kugelabschnittförmig ausgebildet werden, ist dabei praktisch eine Art Kugelgelenkfunktion zu erhalten.

Gemäß Anspruch 2 soll das Gehäuse aus zwei Gehäuseteilen bestehen, wobei die Teilungsebene quer zur Lagerachse im Bereich des Mittelteils liegt. Die Gehäuseteile sind im montierten Zustand mit vorgespannten Elastomerringen dicht, insbesondere durch Pressen, Schrauben, Umbördeln, Verstemmen oder Kleben miteinander verbunden. Damit ist eine einfache Montage in Verbindung mit der erforderlichen Vorspannung und Abdichtung möglich.

Die Durchbrüche am Gehäuse sollen nach Anspruch 3 entsprechend der möglichen kardanischen Auslenkung der Anschlusszapfen kegelstumpfförmig ausgebildet sein, wobei jeweils der Durchbruchrand mit einem Endanschlag aus Elastomermaterial für den zugeordneten Anschlusszapfen versehen ist. Durch einen solchen Endanschlag ist das Gelenklager gegen kardanische Überlastungen geschützt. Der Endanschlag ebenso wie die Geometrie des Durchbruchs kann in unterschiedlichen Richtungen, angepasst an einen konkreten Einsatzfall, unterschiedlich ausgebildet sein.

In einer bevorzugten konkreten Ausführungsform nach Anspruch 4 ist das Mittenteil als Zylinderabschnitt ausgebildet und die beiden Gleitkragen sind ebenfalls zylindrisch mit einem kleineren Durchmesser gegebenenfalls mit einem verrundeten Übergang zum Mittenteil hin ausgeführt. Der Gleitring hat hier im Querschnitt eine Dreieckform und liegt sowohl am Umfang des zugeordneten Gleitkragens und seitlich am Zylinderabschnitt an. Mit einer schräg angestellten Umfangsfläche am Gleitring weist dieser auf eine entsprechend schräg angestellte Innenringkontur des Gehäuses hin. Zwischen dem Gleitring und dieser Innenringkontur ist jeweils der vorgespannte Elastomerring mit etwa gleicher Dicke angeordnet dergestalt, dass die beiden Elastomerringe eine doppelkonische Anordnung bilden. Bei dieser Anordnung werden bei einer zunehmenden kardanischen Verformung die Elastomerringe zunehmend auf Druck beansprucht, so dass diese gleichzeitig zumindest einen Teil der vorstehenden Anschlagfunktion übernehmen können und gegebenenfalls eine spezielle Ausbildung eines Endanschlags am Durchbruch entfallen kann.

Gemäß Anspruch 5 können je nach Auslegung und Einsatzfall jeweils die schräg angestellte Innenringkontur des Gehäuses und die zugeordnete Umfangsfläche des Gleitrings plane Stützflächen für eine exakte Doppelkonusanordnung sein und/oder zur Lageraußenseite hin gewölbte Kugelabschnittflächen darstellen, wodurch weitgehend eine Kugelgelenkfunktion erhalten wird.

In einer bevorzugten Ausführungsform nach Anspruch 6 ist die Kombination aus dem Elastomerring und dem darüberliegenden Gleitring untereinander und mit der Gehäuseinnenwand fest verbunden, so dass dann der Gleitkragen mit einer gleitbaren Umfangsfläche gleitbar am Gleitring gelagert ist. Alternativ könnte jedoch auch gegebenenfalls die Lageanordnung zwischen Gleitring und Elastomerring vertauscht werden, wobei dann der Elastomerring mit darüberliegendem Gleitring am Gleitkragen fest verbunden ist, so dass dieser mit dem Gleitring an einer zugeordneten rotationssymmetrischen Gehäuseinnenwand gleitbar gelagert ist.

Bei einem Einsatz mit ungünstigen Umgebungsbedingungen, beispielsweise als Lenkerlager eines Fahrzeugfahrwerks, wird mit Anspruch 7 vorgeschlagen, dass die jeweils zum Durchbruch hin offenen Gleitflächenspalte des Lagerinnenteils mittels Dichtlippen und/oder überzuziehender Dichtkappen abgedeckt sind. Dazu kann in einer konkreten Ausführung nach Anspruch 8 wenigstens eine umlaufende Dichtlippe jeweils am Gleitring und/oder am Elastomerring und/oder im Bereich des Durchbruchrandes angebracht sein.

Eine einfache konstruktive Lösung nach Anspruch 9 ergibt sich dadurch, dass sich jeweils an einem zylindrischen Gleitkragen zur Lageraußenseite hin ein im Durchmesser reduzierter Dichtbund anschließt und an einem verdrehfest angeordneten Gleitring eine am Dichtbund anliegende umlaufende elastische Dichtlippe angebracht ist.

Die Gleitringe können nach Anspruch 10 vorzugsweise aus gleitfähigem Kunststoff oder aus Metall- oder Keramikmaterial mit einer festhaftenden Gleitschicht hergestellt sein.

Anhand einer Zeichnung wird die Erfindung weiter erläutert.

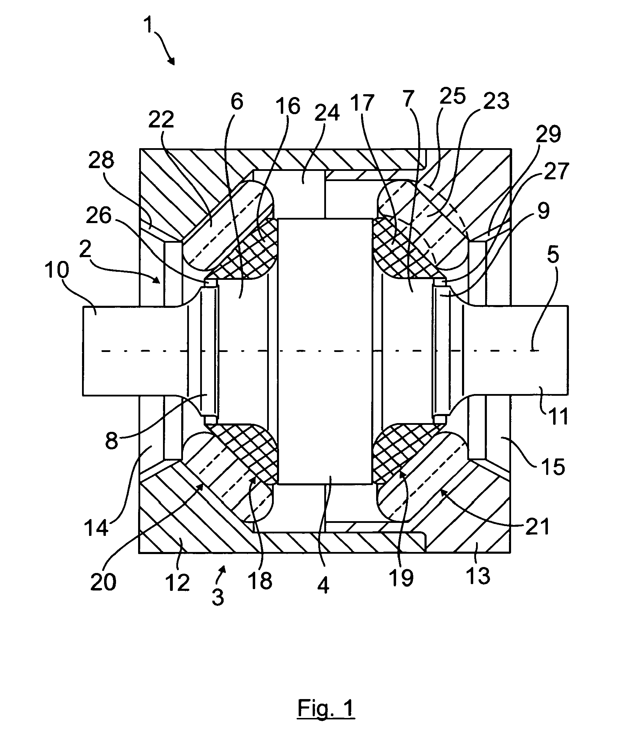

Die einzige Figur zeigt ein Gelenklager 1 mit einem Lagerinnenteil 2 und einem Gehäuse 3. Das Lagerinnenteil 2 weist ein zylindrisches Mittenteil 4 auf, an das sich beidseitig jeweils ein bezüglich einer Lagerachse 5 ebenfalls zylindrischer Gleitkragen 6, 7 anschließt, welcher jeweils mit einem weiter reduzierten Durchmesser über einen Dichtbund 8, 9 in Anschlusszapfen 10, 11 übergeht.

Das Gehäuse 3 ist zweiteilig ausgeführt und besteht aus einem Gehäuseoberteil 12 und einem Gehäuseunterteil 13, wobei durch gegenüberliegende Durchbrüche 14, 15 die Anschlusszapfen 10, 11 aus dem Gehäuse 3 herausgeführt sind.

Die Teilungsebene zwischen dem Gehäuseoberteil 12 und dem Gehäuseunterteil 13 liegt quer zur Lagerachse 5 im Bereich des Mittenteils 4, wobei sich die Gehäuseteile randseitig an der Verbindung mit einer Steckverbindung überlappen und dort im gezeigten Ausführungsbeispiel dicht verklebt sind.

Die beiden Gleitkragen 6, 7 sind in einer Doppelkonusanordnung zur Lagermitte hin abgestützt und gleitbar gehalten. Dazu ist jeweils eine Kombination aus einem am zugeordneten Gleitkragen 6, 7 gleitbar anliegenden Gleitring 16, 17, mit jeweils einem dreieckigen Querschnitt und einem Elastomerring 22, 23 verwendet. Die Gleitringe 16, 17 liegen dabei jeweils am Umfang des zugeordneten Gleitkragens 6, 7 sowie seitlich am Mittenteil 4 an. Beide Gleitringe 16, 17 weisen zudem eine schräg angestellte Umfangsfläche 18, 19 auf, die auf eine entsprechend schräg angestellte Innenringkontur 20, 21 des Gehäuses 3 hin gerichtet ist.

Zwischen der jeweiligen Umfangsfläche 18, 19 und der zugeordneten Innenringkontur 20, 21 ist jeweils der vorgespannte Elastomerring 22, 23 mit etwa gleicher Elastomerringdicke angebracht, so dass insgesamt eine symmetrische Doppelkonusanordnung vorliegt.

Die Elastomerringe 22, 23 sind einerseits an die jeweilige Innenringkontur 20, 21 und andererseits an die Gleitringe 16, 17 angehaftet, so dass jeweils der Gleitkragen 6, 7 mit einer gleitbaren Umfangsfläche gleitbar in den Gleitringen 16, 17 gehalten und gelagert ist.

Zwischen den Gleitringen 16, 17 und um das Mittenteil 4 herum, liegt ein freies Volumen als Freigang (24) im Gehäuse 3, um insbesondere kardanische und gegebenenfalls radiale Auslenkungen des Lagerinnenteils 2 zu ermöglichen.

In der dargestellten Ausführungsform sind die Umfangsflächen 18, 19 der Gleitringe 16, 17 ebenso wie die zugeordneten Innenringkonturen 20, 21 als plane Stützflächen ausgeführt. Alternativ können diese jedoch auch als zur Lageraußenseite hin gewölbte Kugelabschnittflächen 25 ausgebildet sein, wie dies beispielhaft strichliert eingezeichnet ist.

Die jeweils zum zugeordneten Durchbruch 14, 15 hin liegenden Gleitflächenspalte sind durch je eine dicht umlaufende Dichtlippe 26, 27 abgedichtet, die am zugeordneten Dichtbund 8, 9 des Lagerinnenteils 2 anliegt. Zudem kann jeweils am Durchbruchrand bedarfsweise ein Endanschlag 28, 29 aus Elastomermaterial für eine elastische Begrenzung der kardanischen Auslenkung der Anschlusszapfen 10, 11 angebracht sein.

Das dargestellte Gelenklager 1 ermöglicht eine rückstellkraftfreie Verdrehung des Lagerinnenteils 2 um die Lagerachse, wobei der volle Winkelbereich und gegebenenfalls auch ein Durchdrehen möglich sind. Weiter ist eine kardanische Auslenkung mit elastischem Widerstand über relativ große Winkelbereiche mit axial guter Führung möglich. Die Elastomerringe 22, 23 übernehmen zudem die Funktion einer weitgehenden Entkopplung von Vibrationen und Körperschall der Lagerteile.

## Patentansprüche

1. Gelenklager (1) mit einem Lagerinnenteil (2) als erstem Lagerteil mit beidseitig gegenüberliegenden Anschlusszapfen (10, 11) und mit einem Gehäuse (3) als zweitem Lagerteil, in dem das Lagerinnenteil (2) elastisch gelagert ist dergestalt, dass es mit seinen Anschlusszapfen (10, 11) zumindest teilweise aus gegenüberliegenden Durchbrüchen (14, 15) des Gehäuses (3) herausragt, **dadurch gekennzeichnet, dass** das Lagerinnenteil (2) ein Mittenteil (4) mit einem Freigang (24) zum umgebenden Gehäuse (3) aufweist und sich beidseits des Mittenteils (4) jeweils ein bezüglich einer Lagerachse (5) rotationssymmetrischer Gleitkragen (6, 7) anschließt, der jeweils in den aus dem zugeordneten Durchbruch (14, 15) geführten Anschlusszapfen (10,11) übergeht,
dass beide Gleitkragen (6, 7) im Gehäuse (3) jeweils über eine Kombination aus übereinanderliegendem Gleitring (16, 17) und Elastomerring (22, 23) in Richtung der Lagermitte vorgespannt gleitbar gelagert sind, so dass sowohl eine rückstellkraftfreie Verdrehung des Lagerinnenteils (2) um die Lagerachse (5) um den vollen Winkelbereich, als auch eine kardanische Auslenkung mit elastischem Widerstand möglich ist.

2. Gelenklager nach Anspruch 1, **dadurch gekennzeichnet, dass** das Gehäuse (3) aus zwei Gehäuseteilen (12, 13) besteht, wobei die Teilungsebene quer zur Lagerachse (5) im Bereich des Mittenteils (4) liegt, und dass die Gehäuseteile (12, 13) im montierten Zustand mit vorgespannten Elastomerringen dicht, insbesondere durch Pressen und/oder Schrauben und/oder Umbördeln und/oder Verstemmen und/oder Kleben miteinander verbunden sind.

3. Gelenklager nach Anspruch 1 oder 2, **dadurch gekennzeichnet, dass** die Durchbrüche (14, 15) am Gehäuse (3) entsprechend der Auslenkung der Anschlusszapfen (10, 11) kegelstumpfförmig ausgebildet sind, und
dass jeweils der Durchbruchrand mit einem Endanschlag (28, 29) aus Elastomermaterial für den zugeordneten Anschlusszapfen (10, 11) versehen ist.

4. Gelenklager nach einem der Ansprüche 1 bis 3, **dadurch gekennzeichnet, dass** das Mittenteil (4) als Zylinderabschnitt ausgebildet ist und die beiden Gleitkragen (6, 7) ebenfalls zylindrisch mit kleinerem Durchmesser und gegebenenfalls mit einem verrundeten Übergang zum Mittenteil (4) hin ausgeführt sind, und
dass jeweils der Gleitring (16, 17) am Umfang des zugeordneten Gleitkragens (6, 7) und seitlich am Zylinderabschnitt des Mittenteils (4) anliegt und mit einer schräg angestellten Umfangsfläche (18, 19) auf eine entsprechend schräg angestellte Innenringkontur (20, 21) des Gehäuses (3) hinweist, wobei jeweils zwischen der Umfangsfläche (18, 19) des Gleitrings (16, 17) und der Innenringkontur (20, 21) jeweils der vorgespannte Elastomerring (22, 23) mit etwa gleicher Dicke liegt dergestalt, dass die beiden Elastomerringe (22, 23) eine doppelkonische Anordnung bilden.

5. Gelenklager nach Anspruch 4, **dadurch gekennzeichnet, dass** die schräg angestellte Innenringkontur (20, 21) des Gehäuses (3) und die zugeordnete Umfangsfläche (18, 19) des Gleitrings (16, 17) plane Stützflächen und/oder zur Lageraußenseite hin gewölbte Kugelabschnittflächen (25) sind.

6. Gelenklager nach einem der Ansprüche 1 bis 5, **dadurch gekennzeichnet, dass** jeweils die Kombination aus dem gehäuseseitigen Elastomerring (22, 23) und dem darüberliegenden Gleitring (16, 17) untereinander und mit der Gehäuseinnenwand (20, 21) fest verbunden sind und der Gleitkragen (6, 7) mit einer gleitbaren Umfangsfläche (18, 19) gleitbar gelagert ist, oder
dass jeweils die Kombination aus unterem Elastomerring und darüberliegendem Gleitring mit dem Gleitkragen fest verbunden ist und dieser mit dem Gleitring an einer zugeordneten rotationssymmetrischen Gehäuseinnenwand gleitbar gelagert ist.

7. Gelenklager nach einem der Ansprüche 1 bis 6, **dadurch gekennzeichnet, dass** die jeweils zum Durchbruch (14, 15) hin offenen Gleitflächenspalte des Lagerinnenteils (2) mittels Dichtlippen (26, 27) und/oder überzuziehender Dichtkappen abgedichtet sind.

8. Gelenklager nach Anspruch 7, **dadurch gekennzeichnet, dass** wenigstens eine umlaufende Dichtlippe (26, 27) jeweils am Gleitring (16, 17) und/oder am Elastomerring und/oder im Bereich des Durchbruchrandes angebracht ist.

9. Gelenklager nach Anspruch 8, **dadurch gekennzeichnet, dass** sich jeweils an einem zylindrischen Gleitkragen (6, 7) zur Lageraußenseite hin ein im Durchmesser reduzierter Dichtbund (8, 9) anschließt und an einem verdrehfest angeordneten Gleitring (16, 17) eine am Dichtbund (8, 9) anliegende umlaufende elastische Dichtlippe (26, 27) angebracht ist.

10. Gelenklager nach einem der Ansprüche 1 bis 9, **dadurch gekennzeichnet, dass** jeweils der Gleitring (16, 17) aus gleitfähigem Kunststoff oder aus Metall- oder Keramikmaterial mit einer festhaftenden Gleitschicht besteht.
